# EUROPÄISCHE PATENTSCHRIFT

(11) **EP 1 039 763 B1**
(45) Veröffentlichungstag und Bekanntmachung des Hinweises auf die Patenterteilung: **12.11.2008**
(21) Anmeldenummer: 00103838.9
(22) Anmeldetag: 24.02.2000
(51) Int. Cl.: H04Q 3/00, H04Q 11/04

(54) **Kunden- und Netzwerkmanagement für intelligente Netze**
Customer and network management for intelligent networks
Gestion de clients et réseau pour des réseaux intelligents

(30) Priorität: 23.03.1999 DE 19912947
(43) Veröffentlichungstag der Anmeldung: 27.09.2000
(73) Patentinhaber: Deutsche Telekom AG, 53113 Bonn (DE)
(72) Erfinder: Richters, Hans Martin, 21680 Stade (DE); Meyer, Carsten, 21680 Stade (DE)

(56) Entgegenhaltungen:
- WO-A-97/23988
- WO-A-98/04065
- WO-A-98/53582
- WO-A-98/54913
- WO-A-99/07130

## Beschreibung

Die Erfindung betrifft ein Verfahren zum Kunden- und Netzwerkmanagement für intelligente Netzwerke nach dem Oberbegriff des Patentanspruchs 1.

Zur Zeit erfolgt der Verbindungsaufbau, das heißt die Anbindung der Kundenzugänge zum intelligenten Netz über eine ISDN-Wählverbindung mittels eines Routers. Als Verbindungsprotokoll wird das OSI 2/3 Protokoll PPP mit CHAP Authentifizierung angeboten. Dies erfolgt nach der Anwahl eines so genannten Kundenrouters mittels ISDN-Karte und installiertem Netzwerk. Nach der Anwahl gleicht der Kundenrouter den übermittelten Kundennamen und das Passwort mit einer internen Datenbank ab, komplettiert die Verbindung bei erfolgreicher Identifizierung weiter zum intelligenten Netz oder bricht bei nicht erfolgreicher Identifizierung die weitere Komplettierung der Verbindung ab. Dabei erfolgt die Einrichtung von Kundennamen und Passworten durch den jeweiligen Netzwerkbetreiber vor Ort und erfordert die aufwendige Eingabe der Daten einzeln an sämtlichen Zugangsroutern nach dem so genannten Vieraugenprinzip.

Eine Vorrichtung und ein Verfahren zur Kommunikation mit einer Konfigurationseinrichtung zur Einrichtung eines Telekommunikationsnetzwerks ist in der WO 97/23988 offenbart.

Der Ereindung liegt die Aufgabe zugrunde, ein Verfahren zum Kunden- und Netzwerkmanagement für intelligente Netzwerke zu schaffen, das keine Eingabe der Daten in alle Zugangsrouter erfordert wird und bei dem Versuch, eine Verbindung zum intelligenten Netzwerk aufzubauen, nicht mehr den jeweiligen Router veranlassen muss, seine interne Datenbank nach der Berechtigung des Kunden zu befragen.

Die erfindungsgemäße Lösung der Aufgabe besteht im Kennzeichen des Patentanspruchs 1.

Weitere Ausführungen bzw. erfindungsgemäße Lösungen sind in den Kennzeichen der Patentansprüche 2 bis 8 charakterisiert.

Durch den Einsatz eines Servers für die Speicherung der Kundenzugangsdaten wird die Möglichkeit geschaffen, daß diese Daten jetzt direkt durch den Kundenbereich zu administrieren sind. Zusätzlich wird damit die resourcenverbrauchende Speicherung der Daten in den Routern vermieden. Im zentralen Server erfolgt jetzt auch die Berechtigungsprüfung der Kunden und nicht mehr wie bisher im Zugangsrouter. Wenn ein Verbindungswunsch zum Servicemanagementpunkt ansteht, baut der Router erst eine Verbindung zum Server auf. Dieser prüft den mitgelieferten Schlüssel des Routers auf Legitimität und wertet dann die mitgelieferte Kennung und das Paßwort aus. Ist die Berechtigungsprüfung im Server erfolgreich, wird dieses dem Router mitgeteilt. Die Verbindung zum Servicemanagementpunkt des intelligenten Netzes wird durchgeschaltet. Bei einer negativen Auskunft bricht der jeweilige Router die Verbindung ab. Die Administration der Kundendaten im zentralen Server kann dadurch von den berechtigten Dienstleisteanbietern durchgeführt werden. Die Anbindung erfolgt dabei zum Beispiel über bereits installierte Router und den, bei den Diensteanbietern vorhandenen entsprechenden PC's zum Beispiel über einen WWW-Browser. Hiermit können die Kundendaten eingerichtet bzw. gelöscht werden. Damit entsteht ein sehr flexibles Zugangssystem das darüberhinaus leicht administriert werden kann, fehlersicherer als die bisherigen Lösungen ist und in den Routern wird Speicherkapazität eingespart.

Die Einrichtung der Kundendatenbank in den Datenbankrechner wird von den Diensteanbieterzentren über die entsprechenden Router mittels eines WEB-Browsers durchgeführt. Ein auf dem Datenbankrechner installierter WEB-Server bildet die Administrationsschnittstelle für die Diensteanbieter. Hiermit ist die Neueinrichtung und Löschung der Kundenkennungen und Paßwörter möglich. Durch eine periodische Überprüfung der lautenden Applikationsprozesse und die Erreichbarkeit der Router- und Rechnerschnittstellen wird die Verfügbarkeit sichergestellt. Stellt diese Überprüfung fest, daß es zu Komplikationen im Administrationsablauf und/oder Kundenzugang kommt, wird der Datenbankrechner gestoppt und ein Ersatzrechner übernimmt die Funktion, wobei die Ausfallzeit sehr klein ist, das heißt sie liegt innerhalb des Ein-Minuten-Bereichs.

Weitere Vorteile, Merkmale und Anwendungsmöglichkeiten der vorliegenden Erfindung, insbesondere der Verbindungsaufbau sowie die zugehörige Hardware und Software werden in der nachfolgenden Beschreibung in Verbindung mit dem in der Zeichnung dargestellten Ausführungsbeispiel detaillierter beschrieben.

In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet.

In der Zeichnung bedeutet:

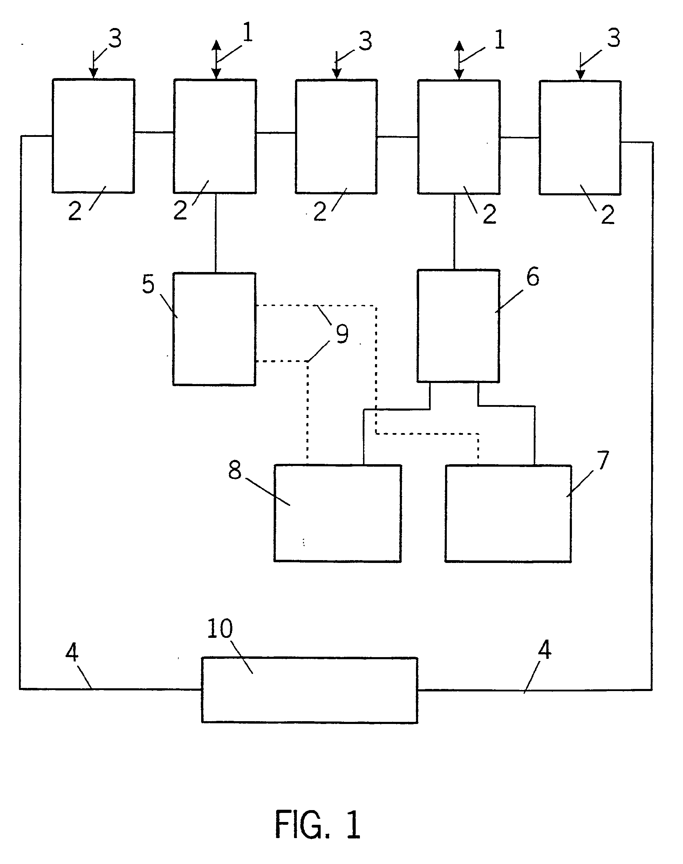

- Fig. 1: ein prinzipielles Schaltbild für ein System zur Durchführung des erfindungsgemäßen Verfahrens.

Bevor die detaillierte Funktionsweise und Wirkungsweise des erfindungsgemäßen Verfahrens erklärt wird, soll zunächst eine Beschreibung der grundsätzlichen Wirkungsweise des Verfahrens folgen.

Wenn ein Kunde zu dem intelligenten Netz einen Zugang haben möchte, fragt nicht mehr der Router seine interne Datenbank nach der Berechtigung des Kundens wie bisher ab, sondern ausschließlich ein zentraler Datenbankrechner.

Startet der Kunde einen Verbindungsaufbau zum intelligenten Netz, so funktioniert dieses über ISDN und die dazu installierte Netzwerksoftware. Nach der Anwahl zu einem der Router wird der Verbindungswunsch an den zentralen Datenbankrechner übermittelt. Dieser überprüft als erstes den vom Router mitgelieferten Schlüssel auf Legitimität und wertet daraufhin die mitgelieferte Kennung und das Paßwort aus. Bei positivem Ergebnis wird ein entsprechendes Signal, zum Beispiel "akzeptiert", und bei negativem Ergebnis ein Signal, zum Beispiel "nicht akzeptiert", an den Router zurückgesendet. Dieser schaltet die Verbindung entweder im ersteren Falle zu dem intelligenten Netzwerk durch oder löst im zweiten Falle die ISDN-Verbindung aus. Die Einrichtung der Kunden in den Datenbankrechner wird von den Zentren der Dienstleister bzw. Diensteanbieter über die entsprechenden Router mittels eines WEB-Browsers durchgeführt.

Ein auf dein Datenbankrechner installierter WEB-Server bildet die Administrationsschnittstelle für den Diensteanbieter. Hiermit ist die Neueinrichtung und Löschung der Kundenkennungen und Paßwörter möglich. Durch eine periodische Überprüfung der laufenden Applikationsprozesse und die Erreichbarkeit der Router- und Rechnerschnittstellen wird die Verfügbarkeit sichergestellt. Stellt diese Überprüfung fest, daß es zu Komplikationen im Administrationsablauf und/oder Kundenzugang kommt, wird der Datenbankrechner gestoppt und ein Ersatzrechner übernimmt die Funktionalität innerhalb eines Zeitraums von < 1 Minute.

Um dies durchzuführen, benötigt der Diensteanbieter einen Arbeitsplatz-PC mit entsprechender auf dein Markt befindlicher Hard- und Software. Dies sind derzeit die mit Windows 95 ausgestatteten PC's, die für die IN-Administration einsetzbar sind. Zusätzlich muß noch installiert sein ein WWW-Browser, wie zum Beispiel der Netscape Communicator 4.0X oder der Internet Explorer 4.0. Wird vom Diensteanbieter bzw. -leister eine Verbindung zum WWW-Server aufgebaut, erfolgt eine Abfrage nach Kundenname und Paßwort, die vom Netzbetreiber zuvor festgelegt wurden. Hinterlegt sind der Kundenname und das Paßwort direkt im WWW-Server. Nach erfolgreicher Anmeldung erscheint die Willkommensseite und die Bearbeitung der Kundenkennung kann erfolgen.

Die Datenbankrechner sind aus Sicherheitsgründen zweifach vorhanden. Eine Überwachung der Rechnerfunktionalität geschieht einerseits durch den aktiven Rechner selbst, andererseits prüft der Ersatzrechner ebenfalls ständig die Verfügbarkeit des aktiven Rechners. Die Anschaltung des Datenbankrechners erfolgt an die Router der Dienstleisterzugänge, wobei aus Sicherheitsgründen ebenfalls eine Zweifachanschaltung erfolgt.

Das in Fig. 1 dargestellte Blockschaltbild zeigt ein intelligentes Netz 10, an das über ein Netzwerk 4 fünf Router 2 angeschlossen sind. Zwei Router 2 sind je einem Dienstleistungszentrum A bzw. B fest zugeordnet. Die Verbindung der beiden Dienstleistungszentren A, B mit den zugehörigen Routern 2 ist deshalb in beiden Fällen als Festverbindung 1 ausgeführt. Die anderen drei Router 2 dienen dem Kundenzugang über ISDN-Wählverbindungen 3. Die Router 2 für die Festverbindungen 1 können zum Beispiel in ihrer Leistungsfähigkeit kleiner ausgeführt sein als die Router 2 für die ISDN-Wählverbindungen 3 im Blockschaltbild. Wie aus dem Blockschaltbild nach Fig. 1 zu sehen ist, sind die jeweils nebeneinander angeordneten Router 2 direkt miteinander verbunden. Die Router 2 für die beiden vorhandenen Festverbindungen 1 sind jeweils mit einer HUB 5 bzw. 6 verbunden, wobei die HUB 5 als Reserve-HUB dient und über Leitungen 9 mit dem Datenbankserver oder Rechner 7 und dem Reserve-Datenbankserver bzw. Rechner 8 verbunden ist. Die HUB 6 ist ihrerseits ebenfalls mit dem Datenbankserver bzw. Rechner 7 und dem Reserve-Datenbankserver bzw. Rechner 8 verbunden. Durch diese Maßnahmen ist es praktisch für jeden Router 2 möglich, über eine der beide HUB's 5 bzw. 6 mit dem Datenbankserver bzw. Rechner 7 und im Fehlerfalle mit den Datenbank-Reserveserver bzw. Rechner 8 zusammenzuarbeiten, so daß ein ausfallsicheres System bzw. ein Verbindungsaufbau über einen zentralen Datenbankrechner geschaffen wird.

Wichtig ist, daß in jedem Router 2 softwaremäßig zwei mögliche Verbindungen angegeben werden können, um im Fehlerfall eine intakte Verbindung zu gewährleisten. Ein Router 2 ist durch diese Maßnahme nämlich immer, das heißt im Normalfall und im Fehlerfall, über eine der beiden HUB's 5 bzw. 6 mit dem Datenbankserver bzw. Rechner 7 bzw. dem Reserve-Datenbankserver bzw. Rechner 8 verbindbar. Startet zum Beispiel ein Kunde einen Verbindungsaufbau zum intelligenten Netzwerk 10, so wird das über ISDN-Wählverbindungen 3 und zugehöriger installierter Netzwerksoftware bewerkstelligt. Nach der Anwahl zu einem der drei Router 2 mit ISDN-Wählverbindung 3 wird der Verbindungswunsch an den Datenbankserver bzw. Rechner 7 über die HUB 6 übermittelt. Der Datenbankserver bzw. Rechner 7 überprüft als erstes den vom Router 2 mitgelieferten Schlüssel auf Legitimität und wertet daraufhin die mitgelieferte Kennung und das Paßwort aus.

Bei positivem Ergebnis wird ein Signal "akzeptiert" und bei negativem Ergebnis ein Signal "zurückweisen" an den Router 2 zurückgesendet. Dieser schaltet die Verbindung zum intelligenten Netzwerk 10 bei positivem Ergebnis durch oder löst die ISDN-Verbindung bei negativem Ergebnis.

Die Einrichtung der Kunden in den Datenbankserver bzw. Rechner 7 wird von den Dienstleistungszentren der Diensteanbieter bzw. Diensteleister A oder B über die entsprechenden Router 2 mittels eines auf dem Markt befindlichen WEB-Browsers durchgeführt.

Ein auf dem Datenbankserver bzw. Rechner 7 installierter WEB-Server bildet die Administrationsschnittstelle für die Dienstleister bzw. Diensteanbieter. Hiermit ist die Neueinrichtung und die Löschung der Kundenkennungen und Paßwörter möglich. Durch eine periodische Überprüfung der laufenden Applikationsprozesse und die Erreichbarkeit der Router- und Rechnerschnittstellen wird die Verfügbarkeit sichergestellt. Stellt diese Überprüfung fest, daß es zum Beispiel Komplikationen im Administrationsablauf und/oder im Kundenzugang kommt, wird der Datenbankserver bzw. Rechner 7 gestoppt und der Reserve-Datenbankserver bzw. Rechner 8 übernimmt die Funktion. Dies geschieht während einer Ausfallzeit, die kleiner als eine Minute ist.

Ein Dienstleister benötigt einen Arbeitsplatz-PC mit entsprechender Hard- und Software-Ausstattung. Dies sind in der Regel heute die Windows 95 PC's, die für die Administration des intelligenten Netzwerkes 10 benutzt werden. Zusätzlich muß noch ein WWW-Browser, wie zum Beispiel Netscape Communicator 4.0 oder Internet Explorer 4.0. Wird vom Dienstleister bzw. Diensteanbieter eine Verbindung zum WEB-Server aufgebaut, erfolgt eine Abfrage nach Benutzernamen und Paßwort, die vom Betreiber des intelligenten Netzwerkes 10 zuvor festgelegt wurden.

Hinterlegt sind der Benutzername und das Paßwort direkt am WEB-Server. Nach erfolgreicher Anmeldung erscheint eine Willkommensseite und die Bearbeitung der Kundenkennung kann daraufhin erfolgen.

Die Benutzerschnittstelle besteht aus zwei wesentlichen Hauptmasken:
- ISDN/PPP-Zugangskennung einrichten
- ISDN/PPP-Zugangskennung löschen

In der Einrichtungsmaske werden die gewünschten Daten für die Eintragung in die Datenbank des Datenbankservers bzw. Rechners eingegeben, diese sind die Kundenkennung und das Paßwort. Mit diesen Daten kann sich der Kunde dann an den Routern 2 via ISDN anmelden und wird zum intelligenten Netz 10 durchgeschaltet. In der Löschmaske wird lediglich die zu löschende Kundenkennung angegeben. Jede Änderung über diese Oberflächen wird sofort an der darunterliegenden Datenbank aktiv. Somit hat jeder neu eingerichtete Kunde nach erfolgreicher Einbringung der Daten umgehend Zugriff auf seine Daten im intelligenten Netz 10.

Zur schnellen Kontrolle, ob die Datenbank immer einwandfrei arbeitet, kann über das WEB-Interface eine Zustandsabfrage gestartet werden.

Die Anschaltung des Datenbankservers bzw. Rechners 7 erfolgt an die Router 2 der Zugänge für die beiden Dienstleistungszentren A bzw. B, wobei ebenfalls aus Sicherheitsgründen eine Zweifachschaltung erfolgt. Als Betriebssystem für den Datenbankserver bzw. Rechner 7 ist zur Zeit das Unix LinuX als Distribution der Firma S.u.S.E. Verfügbar. Es enthält alle benötigten Softwarepakete, die zum Betrieb erforderlich sind.

Wie aus Fig. 1 zu ersehen ist, ist der Datenbankserver bzw. Rechner 7 aus Sicherheitsgründen gedoppelt als Reserve-Datenbankserver bzw. Rechner 8 vorhanden. Eine Überwachung der Rechnerfunktionalität geschieht einerseits durch den aktiven Datenbankserver bzw. Rechner 7 selbst, andererseits prüft der Reserve-Datenbankserver bzw. Rechner 8 ebenfalls ständig die Verfügbarkeit des aktiven Datenbankservers bzw. Rechners 7.

Sollte ein Fehlerfall zum Beenden des Datenbankprozesses führen, so wird dies von dem Reserve-Datenbankserver bzw. Rechner 8 erkannt und der ausgefallene Datenbankserver bzw. Rechner 7 wird gestoppt. Gleichzeitig wird damit der Reserve-Datenbankserver bzw. Rechner 8 zum aktiven Rechner. Zusätzlich wird eine Signalisierung nach außen durchgeführt. Die Prüfung der Verfügbarkeit des aktiven Rechners wird im Minuten-Zyklus durchgeführt. Das Starten der Applikation im Fehlerfall geschieht umgehend, somit ist ein Datenbankrechner im Zeitraum von nur < 1 Minute nicht für die Kunden und Dienstleister erreichbar. Softwaremäßig wird eine Standardsoftware verwendet, die die Möglichkeit bietet, Kennungen und Paßwörter, die auf einem Router 2 verwaltet werden, in einen externen Rechner, zum Beispiel einen Datenbankserver bzw. Rechner 7 auszulagern. Durch entsprechende Konfigurationsmaßnahmen wird der Router 2 angewiesen, seine Informationen von diesem Rechner abzufragen. Zusätzlich ist dadurch die Möglichkeit gegeben, die Datenbank über einen WEB-Zugang zu administrieren, wobei jede Änderung umgehend aktiv wird.

Die Netzwerkverwaltung ist durch eine auf das intelligente Netz 10 abgestimmte Software realisiert, wie zum Beispiel durch das auf dem Markt befindliche Produkt "Scoty", das unter LinuX verfügbar ist. Dadurch ist es möglich, durch minimale Konfigurationsanpaßungen an den einzelnen Netzelementen wie Routern, HUB's und Komponenten des intelligenten Netzes alle SNMP-Nachrichten auszuwerten, darzustellen und gegebenenfalls Alarm auszulösen. Zusätzlich werden von dem Netzwerkmanagementsystem Zustandsabfrage an ausgewählte Komponenten des intelligenten Netzes 10 gestellt und die Ergebnisse ausgewertet.

### Liste der Bezugszeichen

- A,B: Dienstleistungszentren an zwei verschiedenen Orten
- 1: Festverbindung
- 2: Router
- 3: ISDN-Wählverbindung
- 4: Netzwerk
- 5: Reserve-HUB
- 6: HUB
- 7: Datenbankserver bzw. Rechner
- 8: Reserve-Datenbankserver bzw. Rechner
- 9: Verbindungen
- 10: intelligentes Netz

## Patentansprüche

1. Verfahren zum Kunden- und Netzwerkmanagement in intelligenten Netzen, die über Router mit ISDN-Wählverbindung bzw. Festverbindung verbindbar ist, **dadurch gekennzeichnet,**
**dass** die Router (2) für die Festverbindungen (1) von Dienstleistungszentren (A bzw. B) von Diensteanbietern bzw. Dienstleistern immer über eine HUB (6) oder eine Reserve-HUB (5) programmgesteuert mit einem Datenbankserver bzw. Rechner (7) und im Fehlerfalle mit einem Reserve-Datenbankserver bzw. Rechner (8) verbindbar sind und
**dass** außerdem Router (2) mit ISDN-Wählverbindungen (3) angeordnet sind, die entweder über die HUB (6) oder über die Reserve-HUB (5) Zugang zum Datenbankserver bzw. Rechner (7) oder im Fehlerfalle zum Reserve-Datenbankserver bzw. Rechner (8) haben und
**dass** eine Berechtigungsprüfung des Zugangs nur noch im zentralen Datenbankserver bzw. Rechner (7) erfolgt, wobei bei Auftreten eines Verbindungswunsches zunächst vom zugehörigen Router (2) erst eine Verbindung zum Datenbankserver bzw. Rechner (7) aufgebaut wird, wonach diese den mitgelieferten Schlüssel des Routers (2) auf legitimät prüft und dann die mitgelieferte Kennung und das Passwort auswertet und bei erfolgreicher Berechtigungsprüfung dieses dem Router (2) mitgeteilt und die Verbindung zum intelligenten Netz (10) durchgeschaltet wird, während bei einer negativen Operation bzw. Auskunft der jeweilige Router (2) die Verbindung abbricht.

2. Verfahren nach Patentanspruch 1, **dadurch gekennzeichnet, dass** die Router (2) mit ISDN-Wählverbindung (3) als Kundenzugang sich abwechselnd mit den Routern (2) für die Festverbindungen (1) für Dienstleistungszentren (A bzw. B) von Dienstleistungsanbietern im Netzwerk (4) angeordnet und so programmiert sind, dass im Fehlerfalle immer eine zweite Verbindung über einen anderen Router (2) bzw. Über eine andere HUB (5, 6) automatisch ausgewählt und durchgeschaltet wird.

3. Verfahren nach einem der Patentansprüche 1 oder 2, **dadurch gekenntzeichnet, dass** im Fehlerfalle die Router (2) für ISDN-Wählverbindungen (3) bzw. für Festverbindungen (1) softwaregesteuert entweder über die HUB (6) oder die Reserve-HUB (5) Verbindung zum Datenbankserver bzw.
Rechner (7) oder zum Reservedatenbankserver bzw. Rechner (8) haben, wobei der Datenbankserver bzw. Rechner (7) und der Reserve-Datenbankserver bzw. Rechner (8) als soft- und hardewaremäßig gespiegelte Systeme ausgebildet sind.

4. Verfahren nach einem der Patentansprüche 1 bis 3, **dadurch gekennzeichnet, dass** die gewünschten Daten in eine Einrichtungsmaske für die Eintragung in die Datenbank eingegeben werden, wobei es sich um die Kundenkennung und das Passwort handelt.

5. Verfahren nach einem der Patentansprüche 1 bis 4, **dadurch gekennzeichnet, dass** zur Löschung der Kundenkennung die zu löschende Kundenkennung in eine Löschmaske eingegeben wird.

6. Verfahren nach einem der Patentansprüche 1 bis 5, **dadurch gekennzeichnet, dass** zur Kontrolle der Funktionsweise der Datenbank über ein WEB-Interface eine Zustandsabfrage gestartet wird und dass die anschaltung des Datenbankservers bzw. Rechners (7) oder des Reserve-Datenbankservers bzw. Rechners (8) an die Router (2) der Dienstleistungszentren (A, B) erfolgt, wobei zur Erhöhung der Ausfallsicherheit eine Zweifachanschaltung erfolgt.

7. Verfahren nach einem der Patentansprüche 1 bis 6, **dadurch gekennzeichnet, dass** eine Überwachung der Rechnerfunktionalität einerseits durch den jeweils aktiven Datenbankserver bzw. Rechner (7 bzw. 8) erfolgt, dass der Reserve-Datenbankserver bzw. Rechner (8) ebenfalls ständig die Verfügbarkeit des aktiven Datenbankservers bzw. Rechners (7) prüft und dass beim Auftreten eines Fehlerfalls dies vom Reserve-Datenbankserver bzw. Rechner (8) erkannt wird und dieser damit innerhalb einer Zeitspanne von < 1 Minute zum aktiven Rechner wird.

8. verfahren nach einem der Patentansprüche 1 bis 7, **dadurch gekennzeichnet, dass** die Prüfung der Verfügbarkeit des aktiven Datenbankservers bzw. Rechners (7) im Minutenzyklus erfolgt.

## Claims

1. Method for customer and network management in intelligent networks that can be connected through routers with an ISDN dial-up connection or fixed connection, **characterized in that**
the routers (2) for the fixed connections (1) from service centers (A or B) of application providers or service providers can always be connected under program control through a HUB (6) or a backup HUB (5) to a database server or computer (7), and in the event of a failure, with a backup database server or computer (8), and
**in that**, moreover, routers (2) with ISDN dial-up connections (3) are provided that have access to the database server or computer (7), or in the event of a failure, to the backup database server or computer (8) through either the HUB (6) or the backup HUB (5), and
**in that** a verification of authorization of the access takes place only in the central database server or computer (7), wherein when a connection request takes place a connection is first set up from the associated router (2) to the database server or computer (7), after which the latter verifies the legitimacy of the accompanying key supplied by the router (2) and then evaluates the accompanying identifier and password, and in the case of successful verification of authorization communicates this fact to the router (2), and the connection is forwarded to the intelligent network (10), whereas the applicable router (2) terminates the connection in the event of a negative operation or report.

2. Method according to claim 1, **characterized in that** the routers (2) with ISDN dial-up connections (3) as customer access are alternately connected to the routers (2) for the fixed connections (1) for service centers (A or B) of service providers in the network (4) and are programmed such that in the event of a failure a second connection is always automatically selected and forwarded through a different router (2) or through a different HUB (5, 6).

3. Method according to any one of claims 1 or 2, **characterized in that** in the event of a failure the routers (2) for ISDN dial-up connections (3) or for fixed connections (1) have connections through either the HUB (6) or the backup HUB (5), under software control, to the database server or computer (7) or to the backup database server or computer (8), wherein the database server or computer (7) and the backup database server or computer (8) are designed as systems mirrored in hardware and software.

4. Method according to any one of claims 1 through 3, **characterized in that** the desired data are entered into a set-up screen for input into the database, wherein the data are the customer identifier and password.

5. Method according to any one of claims 1 through 4, **characterized in that** in order to delete the customer identifier, the customer identifier to be deleted is entered in a deletion screen.

6. Method according to any one of claims 1 through 5, **characterized in that** a status query is initiated for monitoring the operation of the database through a WEB interface, and **in that** the database server or computer (7) or the backup database server or computer (8) are connected to the router (2) of the service centers (A, B), wherein a dual-redundant connection takes place to increase fault tolerance.

7. Method according to any one of claims 1 through 6, **characterized in that** a monitoring of the computer functionality takes place firstly through the relevant active database server or computer (7 or 8), **in that** the backup database server or computer (8) also continuously checks the availability of the active database server or computer (7), and **in that** upon the occurrence of a failure, this failure is detected by the backup database server or computer (8), which thereby becomes the active computer within a time period of < 1 minute.

8. Method according to any one of claims 1 through 7, **characterized in that** the checking of the availability of the active database server or computer (7) takes place on a one-minute cycle.

## Revendications

1. Procédé de gestion de clients et de réseau dans des réseaux intelligents aptes à être connectés par l'intermédiaire de routeurs avec connexion commutée RNIS ou connexion fixe, **caractérisé**
**en ce que**, pour les connexions fixes (1) de centres de prestation de services (A ou B) de fournisseurs de services ou de prestataires de services, les routeurs (2) sont aptes à être connectés, par commande logicielle, à un serveur de base de données ou ordinateur (7) et, en cas d'erreur, à un serveur de base de données ou ordinateur de réserve (8) par l'intermédiaire d'un HUB (6) ou d'un HUB de réserve (5) et
**en ce que** des routeurs (2) avec connexions commutées RNIS (3) sont en plus disposés, qui ont accès au serveur de base de données ou ordinateur (7) ou, en cas d'erreur, au serveur de base données ou ordinateur de réserve (8) par l'intermédiaire du HUB (6) ou du HUB de réserve (5) et
**en ce qu'**une vérification d'autorisation d'accès ne s'effectue plus que dans le serveur central de base de données ou ordinateur (7), le routeur associé (2) établissant, dans un premier temps, une connexion avec le serveur de base de données ou ordinateur (7) lors la survenance d'une demande de connexion, puis celui-ci vérifie la légitimation de la clé du routeur (2) qui l'accompagne, en suite analyse l'identifiant qui l'accompagne et le mot de passe et, en cas de vérification d'autorisation positive, en informe le routeur (2) et établit la connexion avec le réseau intelligent (10), tandis qu'en cas d'opération ou information négative, le routeur (2) concerné provoque la déconnexion.

2. Procédé selon la revendication 1, **caractérisé**
**en ce que** les routeurs (2) avec connexion commutée RNIS (3) comme accès client sont disposés en alternance avec les routeurs (2) destinés aux connexions fixes (1) de centres de prestation de services (A ou B) de fournisseurs de prestations de services dans le réseau (4) et programmés de manière telle qu'en cas d'erreur, une deuxième connexion soit toujours sélectionnée et établie automatiquement via un autre routeur (2) ou via un autre HUB (5, 6).

3. Procédé selon l'une des revendications 1 ou 2, **caractérisé**
**en ce qu'**en cas d'erreur, les routeurs (2) destinés aux connexions commutées RNIS (3) ou connexions fixes (1) sont connectés, par commande logicielle, soit via le HUB (6) soit via le HUB de réserve (5) avec le serveur de base de données ou ordinateur (7) ou avec le serveur de base de données ou ordinateur de réserve (8), le serveur de base de données ou ordinateur (7) et le serveur de base de données ou ordinateur de réserve (8) étant réalisés sous la forme de systèmes symétriques en termes logiciels et matériels.

4. Procédé selon l'une des revendications 1 à 3, **caractérisé**
**en ce qu'**on entre les données souhaitées dans un masque d'installation pour l'entrée dans la base de données, les données étant l'identifiant client et le mot de passe.

5. Procédé selon l'une des revendications 1 à 4, **caractérisé**
**en ce que** pour supprimer l'identifiant client, on entre l'identifiant client à supprimer dans un masque de suppression.

6. Procédé selon l'une des revendications 1 à 5, **caractérisé**
**en ce que** pour le contrôle du mode de fonctionnement de la base de données, on démarre une interrogation d'état via une interface WEB et
**en ce que** le serveur de base de données ou ordinateur (7) ou le serveur de base de données ou ordinateur de réserve (8) est connecté aux routeurs (2) des centres de prestation de services (A ou B), une double connexion étant réalisée pour augmenter la sécurité en cas de défaillance.

7. Procédé selon l'une des revendications 1 à 6, **caractérisé**
**en ce qu'**une surveillance de la fonctionnalité d'ordinateur s'effectue par le serveur de base de données ou ordinateur (7 ou 8) respectivement actif,
**en ce que** le serveur de base de données ou ordinateur de réserve (8) vérifie également continuellement la disponibilité du serveur de base de données ou ordinateur (7) actif et en ce que, en cas d'apparition d'une erreur, celle-ci est détectée par le serveur de base de données ou ordinateur de réserve (8) qui, dans un laps de temps < 1 minute, devient l'ordinateur actif.

8. Procédé selon l'une des revendications 1 à 7, **caractérisé**
**en ce que** la vérification de la disponibilité du serveur de base de données ou ordinateur (7) actif s'effectue toutes les minutes.
